# EUROPEAN PATENT APPLICATION

(11) **EP 0 789 502 A2**
(43) Date of publication of application: **13.08.1997**
(21) Application number: 97300754.5
(22) Date of filing: 06.02.1997
(51) Int. Cl.: H04Q 11/04, H04L 12/28

(54) **Data distribution systems**

(30) Priority: 08.02.1996 GB 9602570
(71) Applicant: GEC MARCONI LTD., Stanmore, Middlesex HA7 4LY (GB)
(72) Inventor: McSpirit, Charles, Hampshire PO11 9PZ (GB); Harvey, Colin Michael, Hampshire PO11 0NY (GB)
(74) Representative: Walker, Andrew John

(57) **Abstract**

An in flight entertainment system (2) for an aircraft comprises an asynchronous transfer mode network which encodes, carries, switches, and delivers entertainment services as digital data streams. Services provided by the system are video, audio, announcements, data provision, systems controls, telephony and games. The network comprises copper and optical fibre (70, 72) links.

## Description

This invention relates to data distribution systems and is particularly, but not exclusively, related to in-flight entertainment (IFE) systems for aircraft.

Many aircraft already have IFE systems which are capable of showing films, playing music and supporting telephony, games and catalogue shopping applications. Known IFE systems normally have up to three networks for audio/video, data and telecoms distribution. However, it is desirable that IFE systems provide a much wider range of interactive multimedia on demand functions such as video on demand (VOD) and audio on demand (AOD). Digital multimedia on demand systems are currently being implemented in aircraft.

As such demands on IFE systems increase it is desirable to provide an improved system architecture which is capable of supporting wideband applications and allowing more interaction with a user. The continually evolving nature of the IFE systems market means that a highly modular system is preferred which will enable individual functions in the systems to be upgraded periodically. Using a modular system enables use to be made of existing IFE equipment present on an aircraft.

Within the aircraft industry there are a number of different interfaces available between aircraft systems and IFE systems. There is a need for a standard interface to be agreed within the industry thus allowing manufacture of IFE systems which are compatible across the whole of the industry.

It is an aim of the invention to provide an improved system which can meet these needs.

According to the invention is provided an entertainment system to be used in a mode of transportation comprising an asynchronous transfer mode network.

Advantageously the network comprises links of optical fibre. The network may also comprise links of copper. Preferably the network comprises a combination of optical fibre and copper links. Preferably optical fibre links connect to individual seat groups.

Preferably switching nodes in the network are linked in a daisy chain arrangement. Some or all of the switching nodes may be linked in a daisy chain arrangement.

The system may be served by a single data bank. Alternatively it may be served by a plurality of data banks. The data bank or banks may be managed by a file server, such as a cabin file server. The data bank or banks may be a video file server and may hold video data. Audio data and/or games may also be held by the or each data bank.

Preferably the system comprises a compression unit. The compression unit may compress and encode analogue information sources. Once such sources have been compressed and encoded they may be switched around the network in the same way as digital data provided directly from the data bank or banks.

Digital data may be switched by a central asynchronous transfer mode switch. It may be switched to passenger usable interfaces associated with passenger seats or to overhead displays, such as video units.

Decoded and decompressed digital data may be used to drive overhead video units to provide information to passengers.

In one embodiment the invention may provide a data bank managed by a file server, the data bank being in the form of distributed video/audio file servers interconnected by asynchronous transfer mode switches. This may be a system of multiple servers. Asynchronous transfer mode switching allows distribution of the file servers which provides easier installation and better fault tolerance.

Preferably the system comprises a three tier asynchronous transfer mode hierarchy. The tiers may be a central or head tier, a zone tier and a seat tier.

Preferably the entertainment services provided by the network are provided in a digital format. These may include video, audio, passenger address or announcements, data information services, system controls, telephony, games and electronic shopping. In this way one network may be provided which drives all parts of the entertainment system.

Preferably the system comprises a compression unit for encoding and compressing real time video and audio into a digital form. This may include live audio/video inputs, for example external camera, terrestrial television and radio broadcasts. It may also include satellite broadcasts. Compressing such residual sources (which may be analogue) allows easy distribution of many different entertainment services on the same network. Furthermore, once encoded, residual sources may be captured and then stored for later access. This may permit a passenger to replay a television or other broadcast.

In one embodiment the network is based upon optical fibre and can carry multiple video/audio channels, data LAN traffic and voice/data telecommunications. An advantage of using a common transmission mode is that such channels and data can also be carried over existing shielded twisted pair or coaxial cable wiring, or wiring which is compatible with existing wiring/cabling.

Preferably the term transportation includes aircraft, trains, automobiles such as coaches and waterborne craft such as ships and hovercraft.

An embodiment of the invention will be described, by way of example only, with reference to the accompanying drawings in which :
Figure 1 shows a schematic representation of an IFE system according to the invention;
Figure 2 shows the system of Figure 1 in greater detail;
Figure 3 shows part of the system of Figures 1 and 2; and
Figure 4 shows another part of the system of Figures 1 and 2.

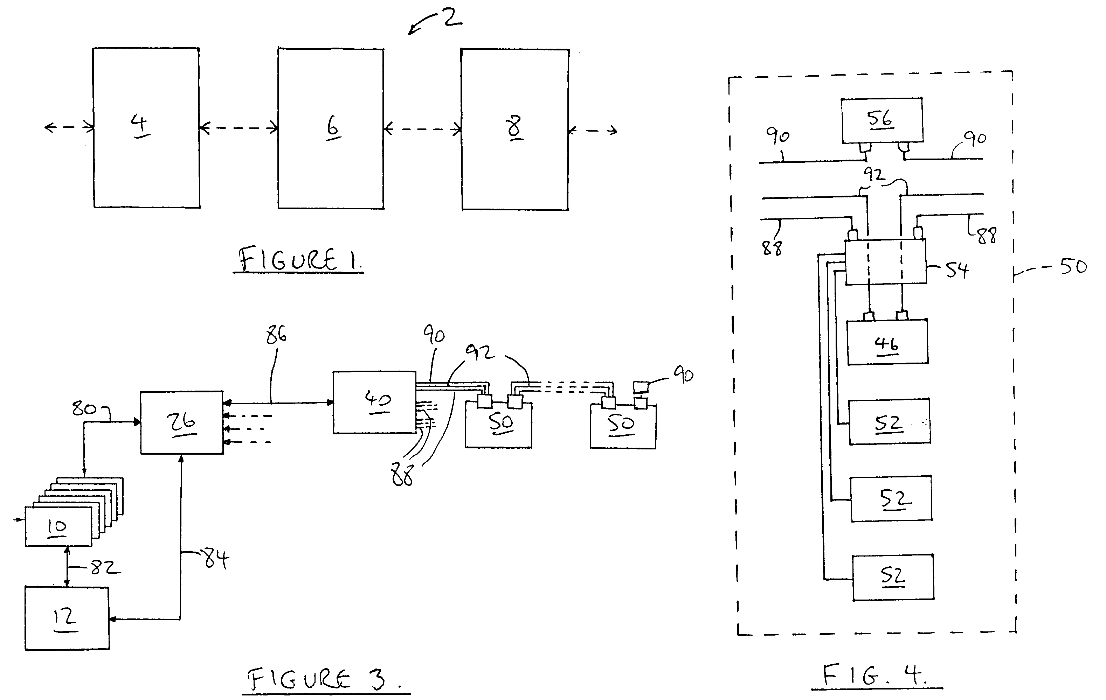

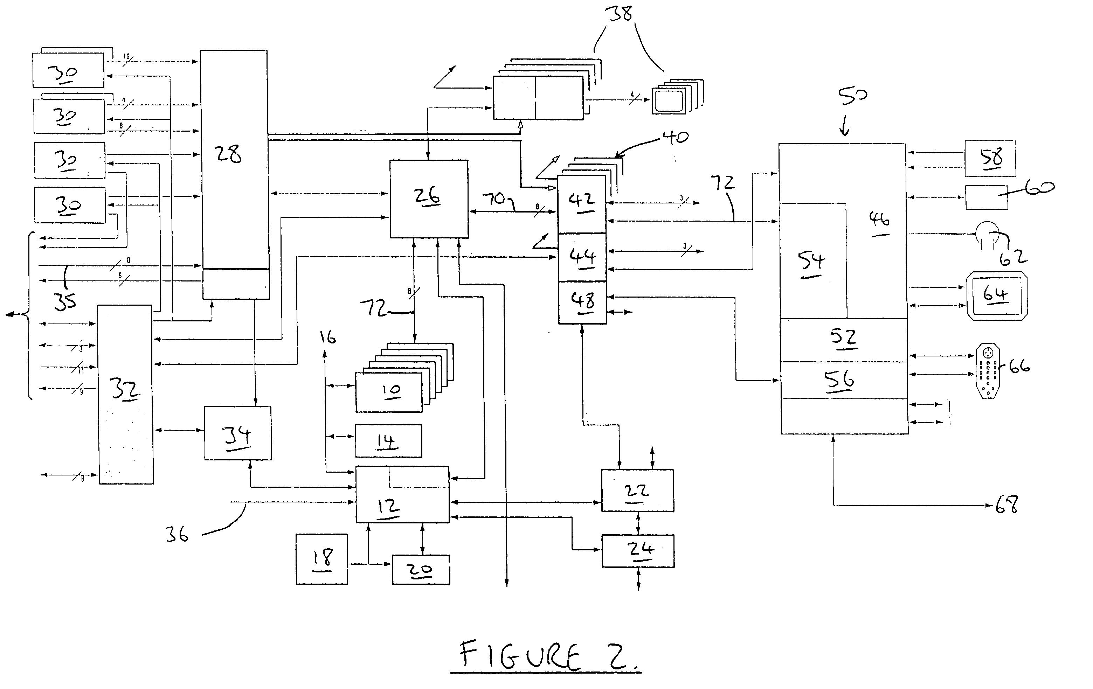

Figure 1 shows a schematic representation of an IFE system 2. The system is in a three tier arrangement having a head end 4, a number of zones 6 and seat ends 8 within each zone 6.

The system 2 is shown in greater detail in Figure 2 and comprises a video file server (VFS) 10 controlled by a cabin file server 12. The VFS 10 and cabin file server 12 are connected over an ethernet LAN which is in turn connected at 16 to one or more attendants' work stations 14 and other terminals. The cabin file server 12 is supported by a disc drive unit 20.

In order to supply VOD and AOD data streams the system 2 uses digital transmission of information to provide a fully digital random access server platform which permits stored compressed video and audio data and allows multiple, simultaneous random accesses to be made to that data. The system 2 uses direct time division multiplexing of the compressed digital data streams from the VFS into high speed digital streams which are then distributed in baseband form via switches to the seats over a digital network. The system 2 uses a full duplex, bi-directional asynchronous transfer mode (ATM) distribution network which is capable of carrying integrated real time video/audio communications simultaneously with PC type computer communications and control information all over the same physical network.

It is advantageous to use ATM transmission because it offers a compact and integrated system which can be readily expanded.

In one embodiment the VFS 10 may be modular comprising a plurality of mini-servers rather than employing a single larger server unit. This provides a greater degree of fault tolerance and capability in scaling up or down to suit a wide variety of aircraft types and airline requirements. Furthermore a number of smaller units are easier to accommodate on an aircraft.

Each VFS 10 is a self contained unit fitted within a single 8-MCU enclosure including a small disk drive array (having a memory capacity of 32 Gbytes in total), a server processor, an ATM interface and a power supply. Using an MPEG-2 compressed video format each VFS 10 is capable of storing approximately 30 hours of multi-lingual video audio programming content and delivering approximately 50 simultaneous VOD and AOD streams. More than 30 hours of programming content may be possible using an MPEG- 1 format. A typical aircraft installation employs between 4 and 8 VFS units.

The cabin file server 12 is connected to communications systems such as a cabin telecom unit 22 and a satellite data unit 24, which themselves are interconnected. The satellite data unit 24 is connected to off-aircraft communications.

An input 36 feeds navigation data into the cabin file server 12 to provide flight information to passengers.

Each VFS 10 is connected to an asynchronous transfer mode switching unit (ATM switch) 26. The ATM switch is a central node in the system and controls switching of data streams about the system 2 and ultimately to passengers. A video audio compression unit 28 supplies the ATM switch with compressed digital video/audio signals, converted from live video/audio and residual analogue player sources 30. These analogue signals may include pre-recorded announcements, boarding music and other analogue audio sources. The compression unit 28 is MPEG-1 based. Alternatively, it is a feature of the present invention that the systems for generating the pre-recorded announcements and boarding music may be incorporated into the VFS 10.

Aircraft systems other than the IFE system interface through the compression unit 28 and also through an aircraft interface unit (AIU) 32. This incorporates all of the interfaces required to manage the interface between the IFE and the aircraft systems. The AIU is the focal point for all control message functions and interfaces directly to a cabin system control panel 34 to provide interactive control and reporting.

A serial data link between the cabin system control panel and the compression unit 28 enables public address (or passenger address) and video announcements to be controlled. Analogue audio signals to and from the aircraft public address side are routed directly along link 35 to the compression unit 28 rather than through the AIU in order to limit cable and connector losses and to simplify the aircraft wiring.

The VFS 10 or the compression unit 28 supplies compressed digital video streams to an overhead video unit 38 which supplies baseband video to up to four monitors. Typically there is at least one overhead unit per zone. There may be more than one. The video streams are sent via the ATM switch 26. A fully populated ATM switch supports up to 8 x 622 Mbits/sec ATM ports and 12 x 155 Mbits/sec ports. The unit comprises a central routing management processor and parallel backplane based switching network, together with a number of 2-port and 4-port interface cards. The switch management and routing control software is embedded within the ATM switch.

Features 10 to 36 comprise the head end which interfaces with the aircraft systems.

Data streams supplied through ATM switch 26 are switched through a zone switching unit 40.

The ATM switch is connected to eight zone switching units 40. The zone switching unit comprises a zone ATM switch 42, a zone passenger service system control 44 and a zone telecom module 48. The zone passenger service system control 44 is responsible for such services as attendant call and reading light. This control is separate from the ATM network because of flight safety and redundancy considerations.

Inputs from the ATM switch 26 and AIU 32 feed into the zone ATM switch 42 which demultiplexes the data streams which are received. The zone ATM switch 42 demultiplexes and remultiplexes passenger data streams which are then delivered to seat columns. Each zone switching unit 40 is connected to four seat columns. The zone ATM switch 42 also routes bi-directional network and control traffic cells between the seat columns via the ATM switch 26 and the cabin file server 12 and the VFS 10.

The zone telecom module 48 controls normal telephony operations and connects to the cabin telecom unit 22 and the satellite data unit 24.

Features 38 and 40 comprise one of the zones 6.

Remultiplexed video streams are supplied by a zone switching unit to a seat column comprising a number (typically 10 to 12) of interactive seat units 50, which are connected together in a daisy chain arrangement 68. The daisy chain links connect adjacent ATM interface and switching modules 54 which demultiplex digital video streams. Groups of three seat processor modules (SPMs) 52 are connected in a star configuration to respective ATM interface and switching modules 54. The ATM module 54 provides 2 x 155 Mbit/sec full duplex ports for the seat column daisy chain connections. The ATM module 54 also provides 25 Mbit/sec full duplex local ports for connections to the seat processor modules. The interactive seat unit 50 also comprises a video audio control module 46 and a telecom interface module 56. The telecom interface module 56 interfaces with the zone telecom module 48.

In another embodiment the telecom interface module 56 may be omitted and this function incorporated into the ATM switching modules 54 and implemented through an ATM network. In this event the cabin telecom unit 22 will not be connected to the zone telecom module 48 and will be connected directly to the ATM switch 26 through an ATM/CEPT-E1 interface. An advantage of this approach is that it reduces the amount of equipment and boards required which provides a saving of space and weight in the aircraft. This illustrates an advantage of ATM that different functions can be integrated in the same network.

Various devices are connected to the interactive seat unit 50 such as a portable video player 58, a passenger control unit (PCU) 60, a headset 62, a seat video display (SVD) 64, and a handset 66 for user control and telephony operations. The PCU, SVD and handset may be integrated in various combinations to give more compact controls, for example the PCU and handset may be integrated in a single unit. Certain manual control operations may be provided by a touch sensitive SVD. Each passenger uses the control units which are provided to interact directly with the VFS 10 for access to the multimedia functions.

Features 50 to 68 comprise one of the seat ends 8.

This system enables data transmission at very high rates. The ATM switch 26 receives output data from the VFS 10 and demultiplexes the data into each of the individual passenger video streams. The streams are switched across the internal backplane of the ATM switch and routed to the intended zone output ports. The individual streams are remultiplexed into 622 Mbits/sec streams. Each zone stream has sufficient bandwidth to support at least 120 passengers with individual multi-lingual VOD/AOD streams.

The 622 Mbit/sec data streams are supplied to the zone switching unit 40. The zone ATM switch 42 has a high speed 622 Mbit/sec port. The zone ATM switch demultiplexes each of the individual passenger video streams received at the high speed port and then switches the streams across its internal backplane to the intended seat column output ports. The individual streams are then remultiplexed into 155 Mbit/sec seat column data streams to be supplied to a group of interactive seat units 50.

Each column stream has sufficient band width to support at least 30 passengers with individual multi-lingual VOD/AOD streams.

The zone ATM switch 42 comprises a central routing management processor and parallel backplane based switching network together with an interface card having one high speed port and four lower speed ports.

The data streams from the zone ATM switch 42 are supplied to the daisy chain ATM interface and switching modules 54 which demultiplex the data streams on the incoming seat column ATM ports and route the selected channels to each of the SPMs 52. Other streams received from the head end side of the seat column network are then remultiplexed by the ATM switching module 54 and output on the downstream seat column port to the next integrated seat units in the daisy chain arrangement 68.

The switching provides a three layer cascade hierarchy in transmission rates of 622 Mbit/sec (ATM switch), 155 Mbit/sec (zone switching unit) and 25 Mbit/sec (ATM switch module).

In order to cope with the high transmission rates required by a VOD/AOD system many of the high rate links are provided by optical fibre. These are indicated as 70 and 72 in Figure 2. Link 70 carries 622 Mbit/sec, links 72 carry 155 Mbit/sec. An advantage of optical fibre is that it has low electromagnetic interference emissions and can meet the strict requirements imposed for use on aircraft.

Operation of the system will now be described with reference to Figure 3 which only includes the main features of Figure 2 for ease of explanation.

Each passenger interacts directly over the ATM network with the VFS for control of their available VOD/AOD stream. Data produced by the VFS 10 is transmitted to the ATM switch 26 at 155 Mbit/sec over an optical fibre 80. The VFS is controlled by the cabin file server 12 over an ethernet LAN connection 82.

The cabin file server 12 is also connected to the ATM switch 26. The ATM switch 26 routes bi-directional data network and control traffic cells between the cabin file server and the zone switching units 40 or other head end system line replaceable units (LRUs) connected to the ATM network. The ATM switch 26 and cabin file server 12 are linked by an ATM link 84 at 155 Mbit/sec.

The ATM switch 26 also receives data from other sources such as the compression unit 28 (at 155 Mbit/sec over ATM) and aircraft interface unit 32 (at 25 Mbit/sec over ATM) and sends data to the overhead video units 38. The data can include video, audio, voice, computer data and control messages. The received signals are demultiplexed and remultiplexed to be transmitted at 622 Mbit/sec over an optical fibre link 86 to the zone switching unit 40. This demultiplexes and then remultiplexes into 155 Mbits/sec column streams which are directed over optical fibre links 88 to a seat column and then onto an interactive seat unit 50. In addition other connections including a power connection 90 and a RS-485 link 92 carrying passenger service system and passenger address information link the zone switching unit 40 to the integrated seat unit 50. The PSS/PA link 92 feeds directly into the video audio control module 46.

The daisy chain linking from the zone switching units 40 to integrated seat units 50 and between adjacent integrated seat units is a combination of optical fibre (carrying VOD/AOD streams) and copper (carrying power and PSS/PA at 100K bit/sec). An advantage of carrying PSS/PA data over copper is that it is separate from the VOD/AOD data streams and thus, where necessary, may override these data streams for presenting general information to all of the passengers, for example emergency or instructional information. VOD/AOD, PSS/PA and power may be carried over separate cables or a single cable assembly may carry optical fibre, power and PSS/PA. However, it may only carry optical fibre and one of the other functions such as power. In any event the connectors connecting to integrated seat units may be combined optical fibre and copper connectors. A daisy chain arrangement between different integrated seat units is advantageous because in different applications, such as different aircraft, the pitch between successive seat columns may differ. Therefore the system is flexible and may readily be adapted to differing seating configurations.

The daisy chains link through ATM switches which include active repeaters in the modules 54 to allow for connector losses which may occur between adjacent units 50. This also allows lower optical power levels to be used than would otherwise be required.

An integrated seat unit 50 is shown in greater detail in Figure 4. The links between the ATM switch module and the other SPMs 52 are at 25 Mbits/sec.

The ATM switch module 54 has three dedicated connections to SPMs which provide dedicated network addresses for each SPM. This avoids sharing single network addresses with multiple SPMs. This provides a one to one relationship between each passenger's SPM and the cabin file server, thus allowing use of industry standard network software rather than requiring software which must be specially tailored or written, such as additional protocol layers.

Although the description has referred to use of the system in an aircraft, it is intended that the system may be used in other applications including automobiles, such as coaches, trains, and waterborne craft, such as a hovercraft.

## Claims

1. An entertainment system (2) to be used in a mode of transportation comprising an asynchronous transfer mode network.

2. A system (2) according to claim 1 in which the entertainment services provided by the network are provided in a digital format.

3. A system (2) according to claim 1 or claim 2 in which digital data is switched by a central asynchronous transfer mode switch (26).

4. A system according to any preceding claim which is served by a stored data source (10).

5. A system (2) according to any preceding claim in which the network comprises optical fibre links (70, 72).

6. A system (2) according to any preceeding claim in which individual seat groups are connected by optical fibre links (72).

7. A system (2) according to any preceding claim in which at least two switching nodes (54) in the network are linked in a daisy chain arrangement (68).

8. A system (2) according to any preceding claim in which the network is a three tier (4, 6, 8) hierarchy.

9. A system according to claim 8 in which the tiers are a central or head tier (4), a zone tier (6) and a seat tier (8).

10. A system (2) according to any preceding claim in which the mode of transportation is an aircraft.
